# EUROPEAN PATENT SPECIFICATION

(11) **EP 2 885 996 B1**
(45) Date of publication and mention of the grant of the patent: **06.07.2016**
(21) Application number: 15000001.6
(22) Date of filing: 15.02.2012
(51) Int. Cl.: A44B 19/12, B29D 5/06, A44B 19/40, A44B 19/32, B29C 45/14

(54) **Double layer coiling zipper and zipper slider**
Doppelschichtiger Spulenreißverschluss und Reißverschluss
Fermeture éclair enroulée à double couche et curseur de fermeture éclair

(30) Priority: 15.03.2011 CN 201120069952 U; 07.04.2011 CN 201110088172; 30.05.2011 TW 100209711
(43) Date of publication of application: 24.06.2015
(62) Divisional of application: 12250032.5
(73) Proprietor: Genmore Zipper Corporation, Sulin District T'ai pei 238 (TW)
(72) Inventor: Wang, Lien-Chou, 238 New Taipei City (TW)
(74) Representative: Whitaker, Iain Mark

(56) References cited:
- EP-A2- 0 111 889
- EP-A2- 2 016 848
- US-A1- 2010 154 179

## Description

### BACKGROUND OF THE INVENTION

### a) Field of the Invention

The present invention relates to zippers and more particularly, to a double layer coiling zipper, which has the left-handed and right-handed series of coils thereof processed through a thermal shape-reformed compression process to enhance coil engagement tightness and has the center block of the zipper slider thereof provided with a front balance tongue for guiding the left-handed and right-handed series of coils between the jointing position and the opening position smoothly.

### b) Description of the Related Art

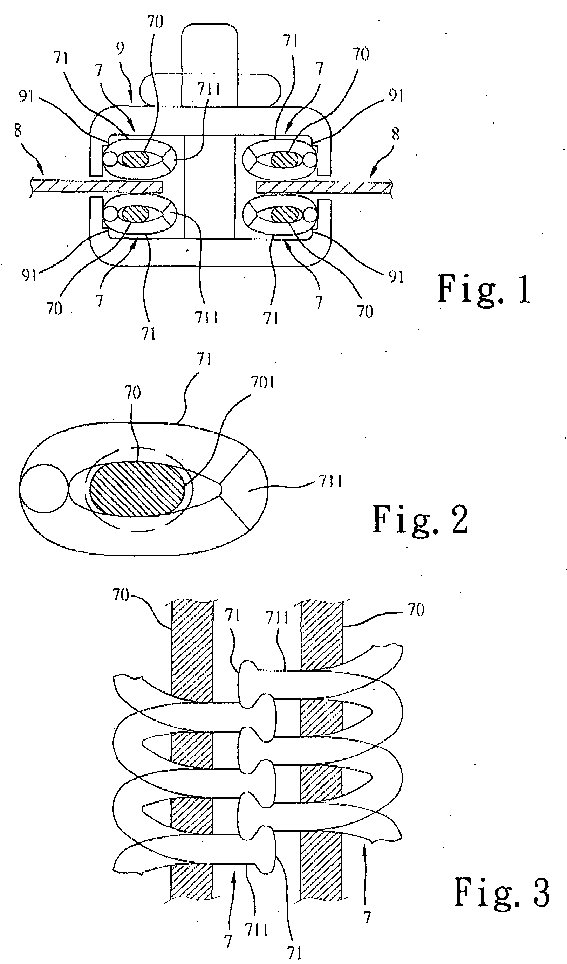

Regular coiling zippers are commonly of a single layer design, comprising two zipper chain tapes and an interlocking series of teeth stitched to each of the two zipper chain tapes. Taiwan Patent Publication Number 441257 discloses a double coil layer zipper design entitled "Improved structure of coiling zipper". However, this patent was invalid after June 15, 2004 due to nonpayment of renewal annuity. China Patent ZL00233580.8 discloses a double coil layer zipper, as shown in FIGS. 1-3, which was invalid after 2005. According to this design, one side of the filler cord 70 is kept away from the coil head **711** of the associating coils **71** (see FIG. 3). When stitching the zipper chain tapes and the series of coils **7** together, the stitching needle may be stuck in the series of coils 7. To avoid this problem, upper and lower series of coils 7 may be stitched to each zipper tape **8,** and then the two zipper chain tapes **8** arc fastened together to form a complete zipper. However, this method is complicated. Further, the left-handed series of coils and the right-handed series of coils may be not kept perfectly straight and smooth. Further, the H-shaped slide guide grooves **91** in the upper and lower chambers inside the zipper slider **9** do not fit the configuration of the coil heads **711** of the series of coils. When pulling the zipper slider **9,** the left-handed and right-handed series of coils **7** may be not accurately interlocked, causes to sliding obstruction and affecting zipper safety.

Further, China Patent ZL200820082747.6 discloses a coil layer zipper design entitled "Tadpole-shaped interlocking teeth". This design of coil layer zipper eliminates the drawbacks of the aforesaid conventional coiling zippers. However, this design of coil layer zipper still has room for improvement.

EP01 11 889 discloses a water-resistant slide fastener stringer.

### SUMMARY OF THE INVENTION

The present invention has been accomplished under the circumstances in view. It is therefore the main object of the present invention to provide a double coil layer zipper, which has the bigger filler cord of each series of interlocking teeth to be compacted so that one extended lateral side edge of the bigger filler cord is stopped against the coil heads of the corresponding series of coils, enabling the left-handed and right-handed series of coils to be accurately interlocked, avoiding loosening.

It is another object of the present invention to provide a double coil layer zipper, which has C-shaped guide grooves defined in the zipper slider for guide the upper and lower interlocking series of coils forwards or backwards smoothly, and therefore when the double layer coiling zippers installed in a corner area of a luggage, tent, or any of a variety of other articles, the interlocking series of coils can be accurately and positively jointed or open.

Next designed object of the present invention to provide a double coil layer zipper, which has a front balance tongue with guide grooves formed at the front side of the filler block of the zipper slider for guiding the coil heads of the series of coils smoothly between the jointing position and the opening position.

Next another object of the present invention to provide a double coil layer zipper, which has the coil body of each coil element of the left-handed and right-handed series of coils be deformed during a thermal shape-reformed compression process that is applied to reform the shape of the coil elements of the left-handed and right-handed series of coils, forming a collar having expanded flanges at two opposite lateral sides, so that when the left-handed and right-handed series of coils are interlocked, the coil head of one respective left-handed series of coil is stopped against one expanded flange of the collar of each of two coil elements of the mating right-handed series of coils, enhancing interlocking tightness.

Next another object of the present invention to provide a double coil layer zipper, which has an adhesive be applied to the lines of stitches of the double layer coiling zipper prior during fabrication, so that the applied adhesive can be cured to affix looping sewing thread-joint points of the line of adhesive-wetted stitches in place during the application of a thermal shape-reformed compression process to reform the shape of the coil elements of the left-handed and right-handed series of coils, enhancing zipper coil strength and wearing resistance and preventing breaking of the lines of adhesive-wetted stitches during transportation of the finished product.

Next another object of the present invention to provide a double coil layer zipper, which slider has rollers provided in the zipper slider between the top slide body block and bottom slide body brock of the zipper slider with the peripheral surfaces thereof kept in contact with the left-handed and right-handed series of coils, assuring accurate and positive engagement between the left-handed and right-handed series of coils.

Next another object of the present invention to provide a double coil layer zipper, which has the zipper slider configured for allowing replacement of the pull tab so that different pull tabs can be selectively attached to the zipper slider to satisfy different clients.

Next another object of the present invention to provide a double coin layer zipper, which has an UV curable adhesive dispensed through a dispensing nozzle into the concave gap in each zipper chain tapes and then cured by ultraviolet rays to form a coating on each zipper tape, providing waterproof, airtight and unbroken functions.

### BRIEF DESCRIPTION OF THE DRAWING

FIG. 1 is a sectional view of a double layer coiling teeth according to the prior art.
FIG. 2 is a schematic sectional view of one coil element for double layer coiling zipper according to the prior art.
FIG. 3 is a plain view illustrating a left-handed series of coil-type coaling teeth and a right-handed series of coil-type coiling teeth of a double layer coiling zipper interlocked according to the prior art.
FIG. 4 is a schematic sectional view of one coil element formed around a bigger filler cord in accordance with the present invention.
FIG. 5 is a plain view illustrating a lelt-handed series of coil-type coiling teeth and a right-handed series of coil-type coiling teeth of a double layer coiling zipper interlocked according to the present invention.
FIG. 6 is a sectional view of a double layer coiling zipper in accordance with a first embodiment of the present invention.
FIG. 7 is a sectional view of a zipper slider for double layer coiling zipper in accordance with the present invention.
FIG. 8 is a sectional elevation of a part of the zipper slider in accordance with the present invention, illustrating the structure of the front balance tongue.
FIG. 9 is a schematic sectional view illustrating zipper chain tapes and interlocking series of coils set in a needle stitching device according to the present invention.
FIG. 10 is an oblique elevation of the needle stitching device shown in FIG. 9.
FIG. 11 is a schematic elevational view of the double layer coiling zipper in accordance with the first embodiment of the present invention.
FIG. 12 is a schematic partial plain view of a double layer coiling zipper in accordance with a second embodiment of the present invention.
FIG. 13 is a schematic partial elevational view of the double layer coiling zipper in accordance with the second embodiment of the present invention.
FIG. 14 is a schematic drawing illustrating an UV curable adhesive injected through a dispensing nozzle into the concave gap between upper and lower waterproof zipper chain tapes according to the present invention.
FIG. 15 is a flow chart of a thermal shape-reformed compression process according to the present invention.
FIG. 16 is a schematic sectional view of a thermal shape-reformed compression system according to the present invention.
FIG. 17 is an elevational view of the thermal shape-reformed compression system according to the present invention.
FIG. 18 is an enlarged view of a part of the thermal shape-reformed compression system according to the present invention.
FIG. 19 is a plain view of the thermal compression die shown in FIG. 18.
FIG. 20 is a schematic drawing a finished product after thermal shape-reformed compression process according to the present invention.
FIG. 21 is schematic drawing illustrating a hot air compression type thermal shape-reformed compression system according to the present invention.
FIG. 22 is an enlarged view of one thermal compression wheel shown in FIG. 21.
FIG. 23 is a front view of one coil element of a double layer coiling zipper in accordance with a third embodiment of the present invention.
FIG. 24 is a top view of one left-handed series of coils and one mating right-handed series of coils of the double layer coiling zipper in accordance with the third embodiment of the present invention.
FIG. 25 corresponds to FIG. 24, illustrating the left-handed series of coils and the right-handed series of coils interlocked.
FIG. 26 is a sectional view of the left half of the double layer coiling zipper in accordance with the third embodiment of the present invention.
FIG. 27 is a sectional view of the double layer coiling zipper in accordance with the third embodiment of the present invention, illustrating the left-handed series of coils and the right-handed series of coils interlocked.
FIG. 28 is a sectional view of a double layer coiling zipper in accordance with a fourth embodiment of the present invention.
FIG. 29 is a schematic top view of the zipper slider for double layer coiling zipper in accordance with the fourth embodiment of the present invention.
FIG. 30 is a schematic bottom view of the zipper slider shown in FIG. 29.
FIG. 31 is a schematic side view illustrating an operation status of the zipper slider of the double layer coiling zipper in accordance with the fourth embodiment of the present invention.
FIG. 32 is a schematic sectional view of a double layer coiling zipper in accordance with a fifth embodiment of the present invention (before positioning of the crown of the zipper slider).
FIG 33 is an elevational view of the zipper slider of the double layer coiling zipper in accordance with the fifth embodiment of the present invention.
FIG. 34 is a schematic top view of the zipper slider of the double layer coiling zipper in accordance with the fifth embodiment of the present invention (before positioning of the crown of the zipper slider).
FIG. 35 is a schematic side view of the zipper slider of the double layer coiling zipper in accordance with the fifth embodiment of the present invention.
FIG. 36 is a sectional elevation of a part of the zipper slider of zipper slide of the double layer coiling zipper in accordance with the fifth embodiment of the present invention.
FIG. 37 is a schematic side view of an alternate form of the zipper slider for the double layer coiling zipper in accordance with the fifth embodiment of the present invention, illustrating the sliding latch disengaged from the crown.
FIG. 38 corresponds to FIG. 37, illustrating the sliding latch forced into engagement with the crown.

### DETAILED DESCRIPTION OF THE PREFERRED EMBODIMENTS

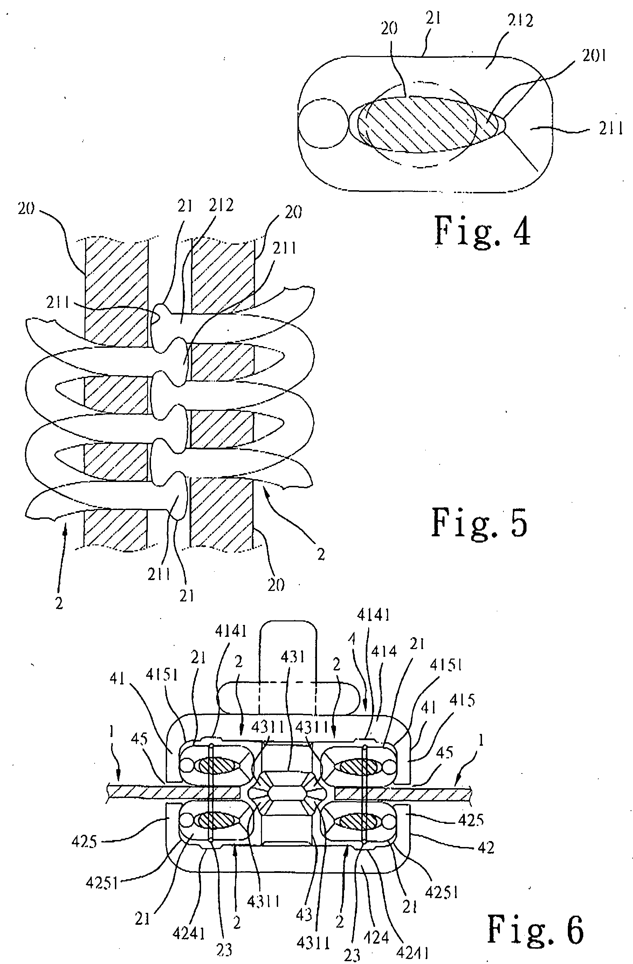

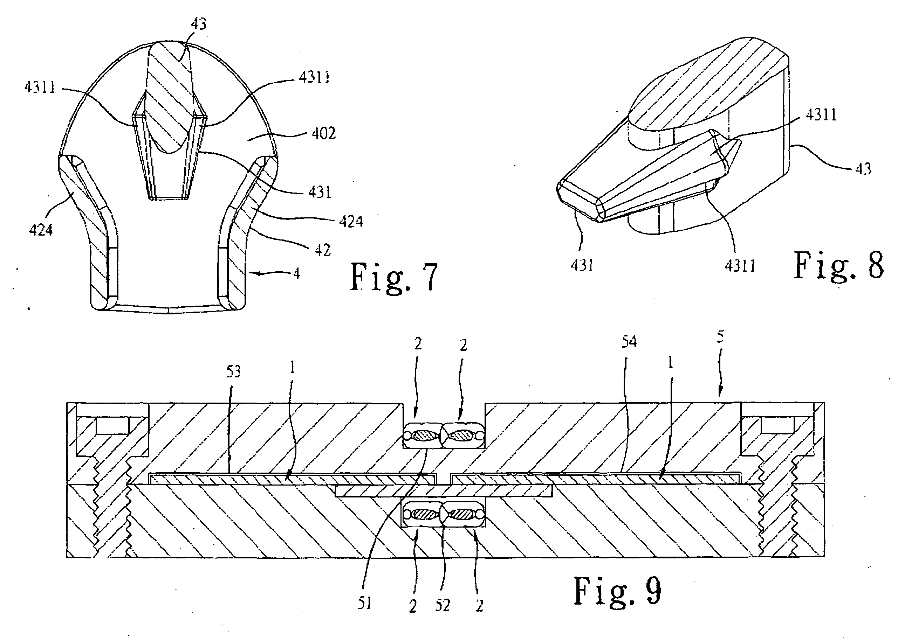

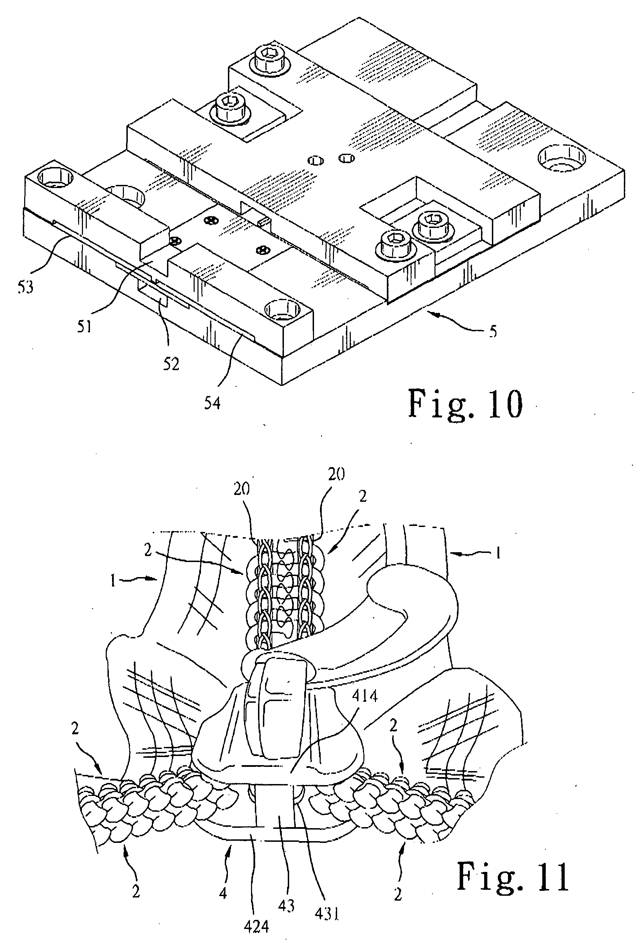

Referring to FIGS. 4-8 and FIG. 11, a double layer coiling zipper in accordance with a first embodiment of the present invention is shown. The double coil layer zipper is a sandwich mesh of double coil layer zipper, comprising two zipper chain tapes **1,** and an interlocking series of teeth **2** at each of opposing top and bottom sides of each of the zipper chain tapes **1.** Each interlocking series of teeth 2 comprises a left-handed or right-handed series of coils **21** (see FIG. 7 and FIG. 8). Each coil element of the left-handed or right-handed series of coils **21** comprises a coil head **211** and a coil body **212** connected to the front side of the coil head **211.** Further, the coil heads **211** and coil bodies **212** of the left-handed and right-handed series of coils **21** are respectively interlocked. During fabrication of the coils **21,** the coil material is spirally extended around a bigger filler cord **20** subject to the operation of a left/right screw rod, and compressed into substantially rectangular coil elements (see FIG. 4). At this time, the edge of one side **201** of the bigger filler cord **20** touches and stops the coil heads **211** of the respective coils **21** so that the left-hunded and right-handed series of coils **21** can be interlocked positively. Thus, when the interlocking series of teeth **2** are interlocked and respectively set in upper and lower guide grooves **51;52** of needle stitching device **5** (see FIGS. 9 and 10). the left and right zipper chain tapes **1** arc respectively received in left and right guide grooves **53;54** and then stitched together at a time. Technically, one false step will make a great difference. Coarse threads are used and twisted into the desired bigger filler cord (see FIG. 4). By means of the fixed pitch and space between the two screw rods of the zipper chain machine (not shown), the coil elements of the interlocking series of teeth thus made are compressed into substantially rectangular profile (see FIGS. **4** and 5), and at the same time, the circular cross section of the flexible bigger filler cord **20** is compressed into an oval shape so that the edge of one side **201** of the bigger filler cord **20** touches and stops the coil heads **211** of the respective coils **21,** facilitating interlocking between the left-handed and right-handed series of coils **21** and avoiding disengagement of the interlocked coils **21.** After installation of a zipper slider **4** in the double layer coiling zipper, the zipper slider **4** can be moved to joint or open the left-handed and right-handed series of coils **21** smoothly and accurately. Further, this design enables the interlocking series of teeth **2** and the left and right zipper chain tapes **1** to be accurately stitched together at a time, assuring a high level of zipper quality.

Further, the front ends of the coil elements of the left-handed and right-handed series of coils **21** are compacted into respective coil heads **211;** the rear ends of the coil elements of the left-handed and right-handed series of coils **21** are maintained flexible and smoothly arched. Further, the zipper slider **4** comprises a top slide body block **41,** a bottom slide body block **42**, a center block **43** connected between the top slide body block **41** and the bottom slide body block **42,** a zipper tape gap **45** defined in between the top slide body block **41** and the bottom slide body block **42** (see FIG. 4), and a crown (not shown) located on the top side of the top slide body block **4.** The top slide body block **41** and the bottom slide body block **42** respectively define therein a substantially C-shaped space so that two C-shaped guide grooves **4151** are bilaterally defined between the top wall **414** and opposing sidewalls **415** of the top slide body block **41;** two C-shaped guide grooves **4251** are bilaterally defined between the bottom wall **424** and opposing sidewalls **425** of the bottom slide body block **42.** The C-shaped guide grooves **4151;4251** fit the outer smoothly arched configuration of the coils 21 (see FIG. 6). After insertion of the upper and lower zipper chain tapes through the upper and lower C-shaped spaces in the zipper slider 4 between the top slide body block **41** and the bottom slide body block **42,** the C-shaped guide grooves **4151;4251** guide the upper and lower interlocking series of coils 21 forwards or backwards smoothly. Thus, even the double layer coiling zipper is installed in a corner area or a luggage, tent, or any of a variety of other articles, the interlocking series of coils **21** can be accurately and positively jointed or opened. Further, as shown in FIG. 6, escape grooves **4141;4241** are respectively located on the top wall **414** of the top slide body block **41** and the bottom wall of the bottom slide body block **42** for the passing of the respective lines of adhesive-wetted stitches **23** that secure the respective interlocking series of teeth **21** to the respective zipper chain tapes **1,** avoiding friction.

Further, the zipper slider **4** comprises a front balance tongue **431** forwardly extended from the center block **43** (see FIGS. 6-8) and matching the arched edge of the coil heads **211** of the series of coils **21.** the front balance tongue **431** comprises a plurality of guide grooves **4311** for guiding the coil heads **211** of the series of coils **21,** enabling the series of coils **21** to be jointed or opened smoothly and stably.

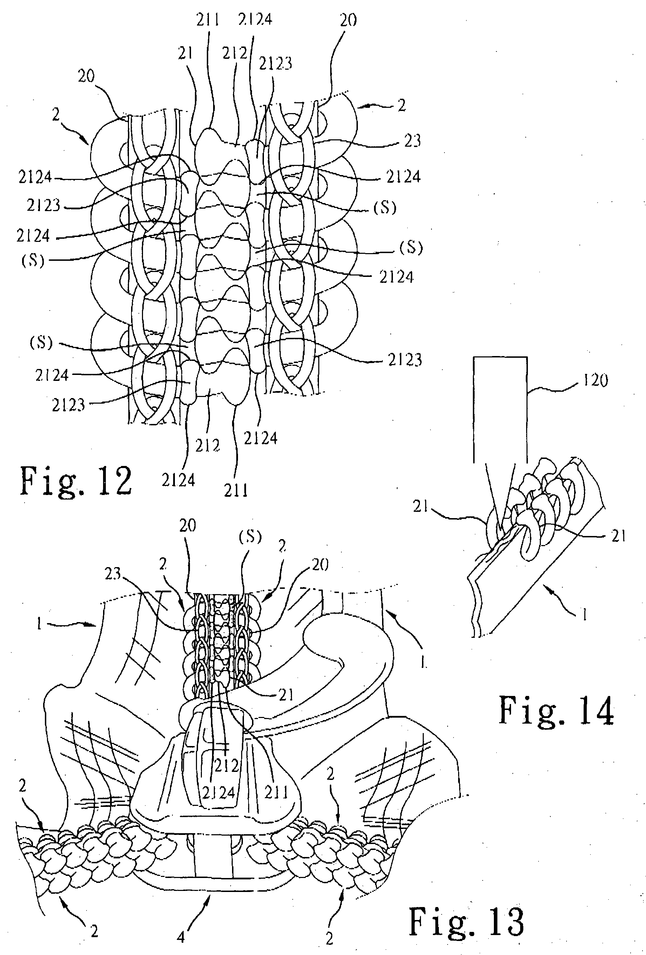

FIGS. 12 and 13 illustrate a double layer coiling zipper in accordance with a second embodiment of the present invention. According to this second embodiment, the series of coils of the double layer coiling zipper are further processed through a thermal shape-reformed compression process to enhance strength and wear resistance. As illustrated in FIGS. 12 and 13, the double layer coiling zipper comprises left and right zipper chain tapes **1,** left-handed and right-handed series of coils 21 respectively stitched to opposing top and bottom sides of each of the left and right zipper chain tapes **1** with lines of adhesive-wetted stitches **23,** and a zipper slider (not shown) movable to joint/open the left-handed and right-handed series of coils **21,** wherein each coil element of the left-handed and right-handed series of coils **21** comprises a coil head **211.** and a coil body **212** connected to the front side of the coil head **211.**

The coil body **212** of each coil element of the left-handed and right-handed series of coils **21** is deformed during the thermal shape-reformed compression process, forming a collar **2123** having expanded flanges **2124** at two opposite lateral sides. When the left-handed and right-handed series of coils **21** arc interlocked, the coil head **211** of one respective left-handed series of coil **21** is stopped against one expanded flange **2124** of the collar **2123** of each of two coil elements of the mating right-handed series of coils **21,** enhancing interlocking tightness. When an external sharp object (for example, ball point pen) is inserted into the interlocking series of teeth **2,** the sharp point of the external sharp object may be forced into a tiny space **S** (below 0.3mm) between the line of adhesive-wetted stitches **23** and the adjacent expanded flanges **2124.** However, when the external sharp object is forced forwards continuously, it is prohibited from further movement to force the locked series of coils **21** apart due to that the coil heads **211** of the left-handed or right-handed series of coils 21 are stopped by the expanded flanges **2124** of the collars **2123** of the mating right-handed or left-handed series of coils **21.** Thus, this second embodiment enhances the strength and interlocking tightness. Further, as shown in FIG. 14, a glue dispenser may be used to dispense an UV curable adhesive through a dispensing nozzle **120** into the concave gap in between each zipper chain tapes **1** and then cured by ultraviolet rays. Thus, the applied UV curable adhesive seals the concave spaces in the zipper chain tapes **1** and between both teeth then thermal dried, enhancing waterproof airtight and unbroken functions.

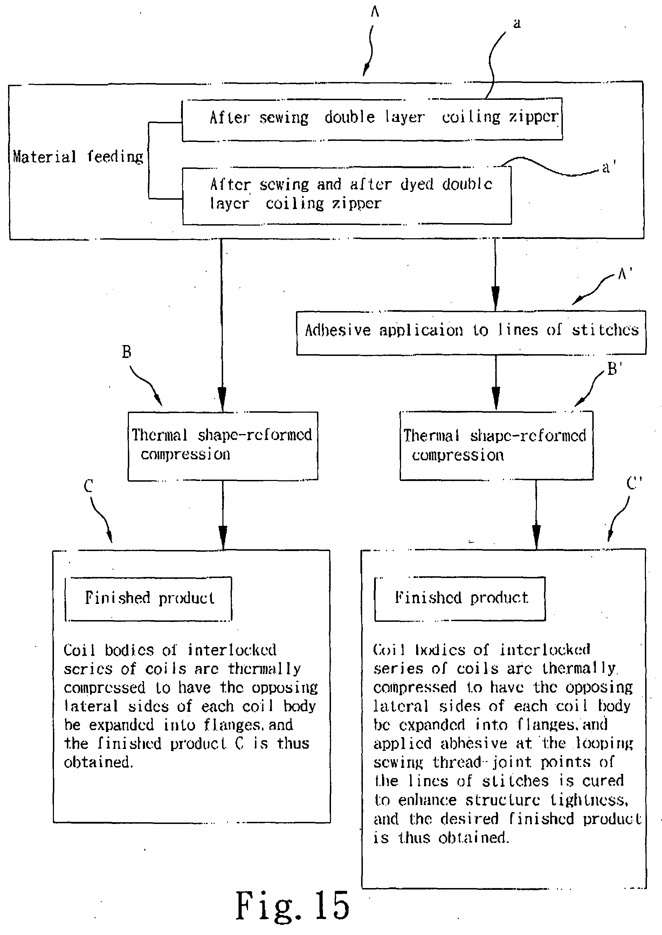

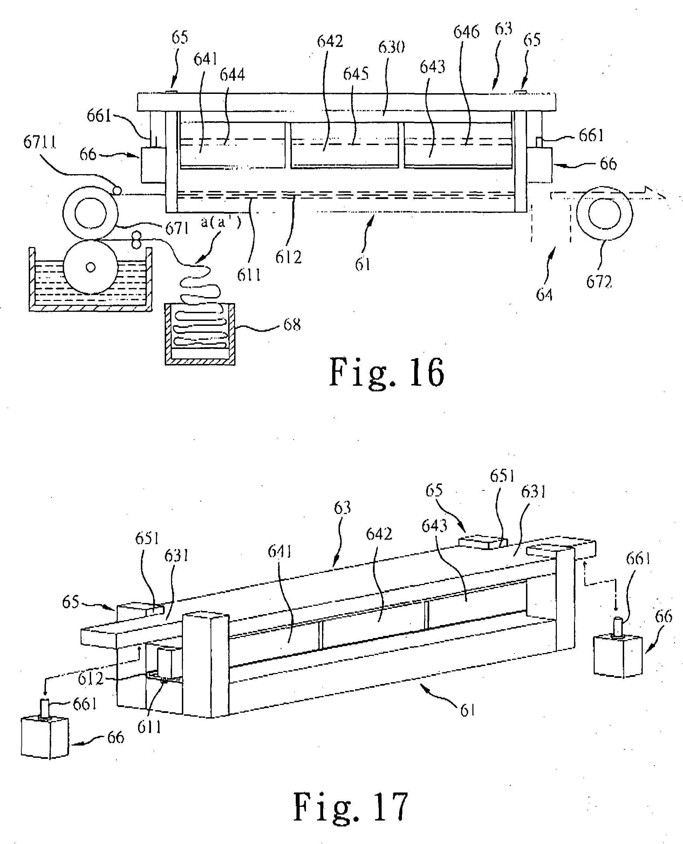

Further, the aforesaid thermal shape-reformed compression process includes three steps, i.e., step A, step B and step C. Step A: Put a after sewing double layer coiling zipper **a** or after sewing and after dyed double layer coiling zipper **a'** in a feeding container **68** (see FIGS. 15 and 16), enabling the double layer coiling zipper a or **a'** to be fed into a lower table **61** (see FIGS. 16-18). At this time, the interlocking series of teeth **2** of the double layer coiling zipper **a** or **a'** are guided into guide grooves **611** in the lower table **61** below a cover plate **612** so that the double layer coiling zipper a or **a'** can be smoothly forwardly delivered by a motor drive **64** step by step subject to a predetermined time interval;

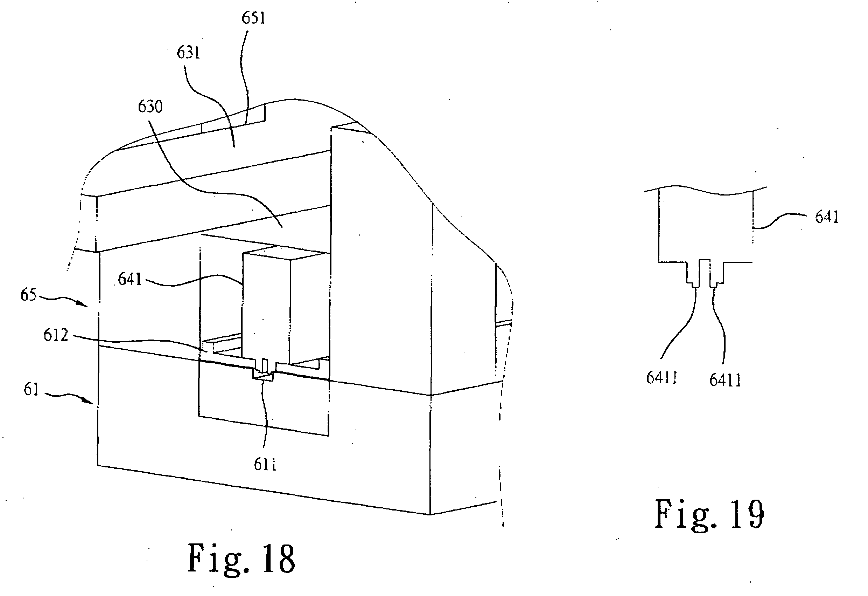

Step B:Operate power cylinders **66** to extend/retract reciprocating rods **661** thereof in moving sliding blocks **631** of an upper table **63** along vertical sliding grooves **651** of upright supports **65** relative to the lower table **61** and control a temperature-controlled heater **644** to heat a thermal compression die **641** at the bottom side of the upper table **63** to about 200°C∼300°C or preferably 250°C∼280°C (subject to the material of the interlocking teeth of the double layer coiling zipper), forcing the typeface **6411** of the thermal compression die **641** (see FIG. 19) against the coil bodies **212** of the coil elements of the series or coils **21** of the interlocking series of teeth **2** of the double layer coiling zipper **a** or **a',** and therefore the coil bodies **212** are deformed to provide a respective collar **2123** having expanded flanges **2124** (see FIGS. 12, 13 and 30). A finished product **C** is thus obtained.

Further, a front guide roller set **671** and a rear guide roller set **672** are respectively arranged at front and rear sides relative to the upper table **63** for guiding the double layer coiling zipper **a** or **a'** into the lower table **61** or the finished product C out of the lower table **61.**

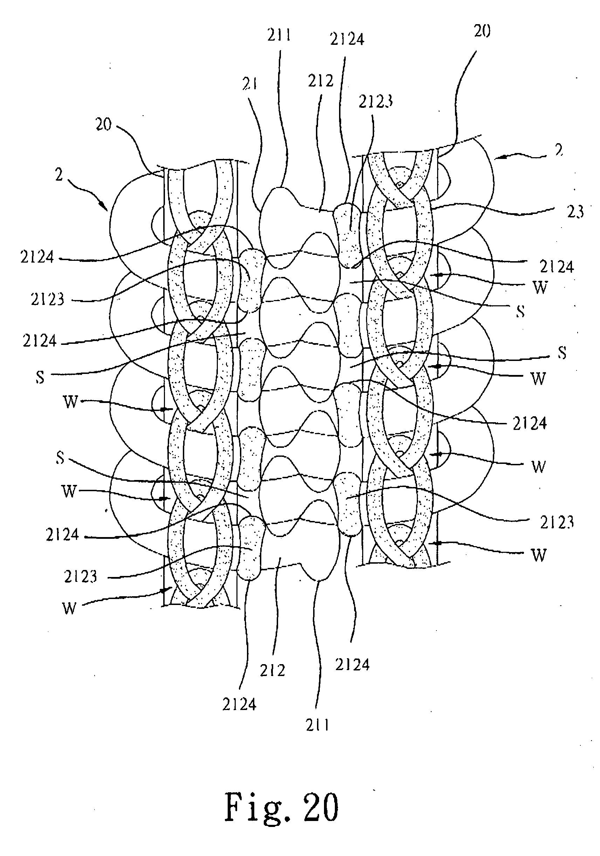

Further, an adhesive (for example, epoxy resin) may be applied to the lines of adhesive-wetted stitches **23** of the double layer coiling zipper **a** or **a'** prior to the thermal shape-reformed compression process. During the thermal shape-reformed compression process, the applied adhesive is cured to affix looping sewing thread-joint points **W** of the line of adhesive-wetted stitches **23** in place (see FIG. 20), enhancing zipper coil strength and wearing resistance.

Further, as stated above, the aforesaid front guide roller set **671** is arranged at the front relative to the upper table **63** for guiding the double layer coiling zipper **a** or **a'** into the lower table **61,** the rear guide roller set **672** is arranged at the rear side relative to the upper table **63** for guiding the finished product **C** out of the lower table **61.** Further, the front guide roller set **671** comprises a tension bar **6711** for pressing on the double layer coiling zipper a or **a'** that is being guided into the lower table **61.**

Further, the aforesaid thermal shape-reformed compression system further comprises a heat insulating plate **630** set between the thermal compression die **641** and the upper table **63.**

Further, as shown in FIG. 16, the cover plate **612** is kept in proximity to the top wall of the lower table **61,** enabling the double layer coiling zipper **a** or **a'** to be smoothly delivered along the lower table **61** by the motor drive **64.**

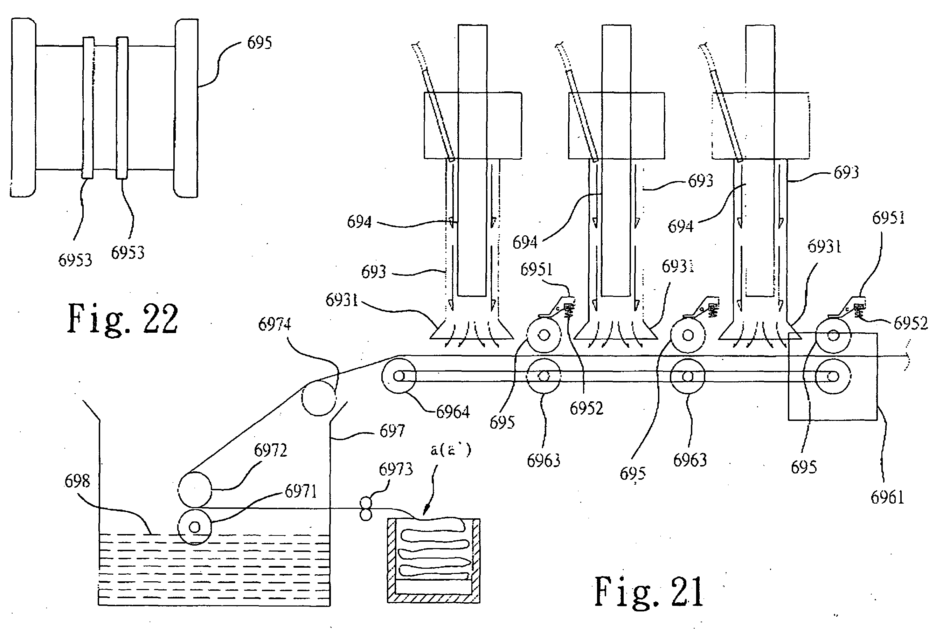

Further, as shown in FIG. 21, the aforesaid thermal shape-reformed compression process can be achieved by means of the application of hot air. This hot air compression type thermal shape-reformed compression process includes the steps of material feeding **A** and thermal compression **B.**
Material feeding A:
   Deliver a after sewing double layer coiling zipper a or after sewing and after dyed double layer coiling zipper **a'** over the bottom side of each of a number of hot air pipes **693;**
Thermal compression **B:**
   Drive hot air out of the hot air pipes **693** through flat nozzles **6931** thereof toward the coil bodies **212** of the coil elements of the series of coils **21** of the interlocking series of teeth **2** of the double layer coiling zippera or **a'** to soften the upper part of the coil bodies **212** without softening the lower part of the coil bodies **212,** enabling the softened upper part of the coil bodies **212** to be rammed by typefaces **6953** of thermal compression wheels **695** (see FIG. 22), forming a respective collar **2123** having expanded flanges **2124** (see FIGS. 20), and the desired finished product C is thus obtained.

Alternatively, the hot air compression type thermal shape-reformed compression process can be configured to include the steps of: material feeding **A'**, adhesive dispensing **A',** and thermal compression **B'.**
Material feeding A':
   Deliver a after sewing double layer coiling zipper **a** or after sewing and after dyed double layer coiling zipper **a'** over the bottom side of each of a number of hot air pipes **693;**
Adhesive dispensing **A':**
   Apply an adhesive (for example, epoxy resin) to the lines of adhesive-wetted stitches **23** of the double layer coiling zipper **a** or **a';**
Thermal compression **B'**:
   Drive hot air out of the hot air pipes **693** through flat nozzles **6931** thereof toward the coil bodies **212** of the coil elements of the series of coils **21** of the interlocking series of teeth **2** of the double layer coiling zipper **a** or **a'** to soften the upper part of the coil bodies **212** without softening the lower part of the coil bodies **212,** enabling the softened upper part of the coil bodies **212** to be rammed by typefaces **6953** of thermal compression wheels **695** (see FIG. 22) to provide a respective collar **2123** having expanded flanges **2124** (see FIGS. 20) and the applied resin to be cured to affix the looping sewing thread-joint points **W** of the line of adhesive-wetted stitches **23** in place (see FIG. 20), and the desired finished product **C'** is thus obtained.

Further, as shown in FIG. 21, during the step of adhesive dispensing **A',** a motor drive **6961** is controlled to rotate transmission wheels **6963** and zipper-transfer wheels **6964** that arc arranged below the hot air pipes **693.** Further, the thermal compression wheels **695** arc respectively disposed above the transmission wheels **6963;** the double layer coiling zipper a or **a'** is been delivered through the gap between the thermal compression wheels **695** and the transmission wheels **6963.** Further, a respective pressure plate **6951** is supported on a respective spring member **6952** and forced by the spring member **6952 to** press on one respective thermal compression wheel **695.**

Further, an adhesive container **697** is provided to hold an adhesive **698.** The double layer coiling zipper **a** or **a'** is delivered through the gap in between a zipper-transfer roller **6972** and an adhesive dispensing roller **6971** in the adhesive container **697** before reaching the space right below the hot air pipes 693. Further, guide rollers **6973** and tension rod **6974** are respectively for guiding the double layer coiling zipper **a** or **a'** into or out of the adhesive container **697.**

Further, a temperature-controlled heater **694** is mounted in each hot air pipes **693** for heating the applied gas within 300°C-400°C.

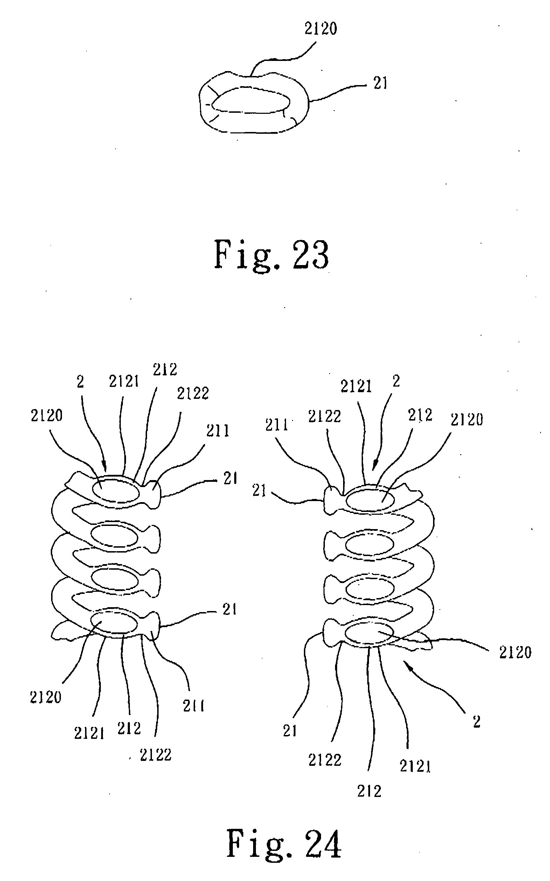

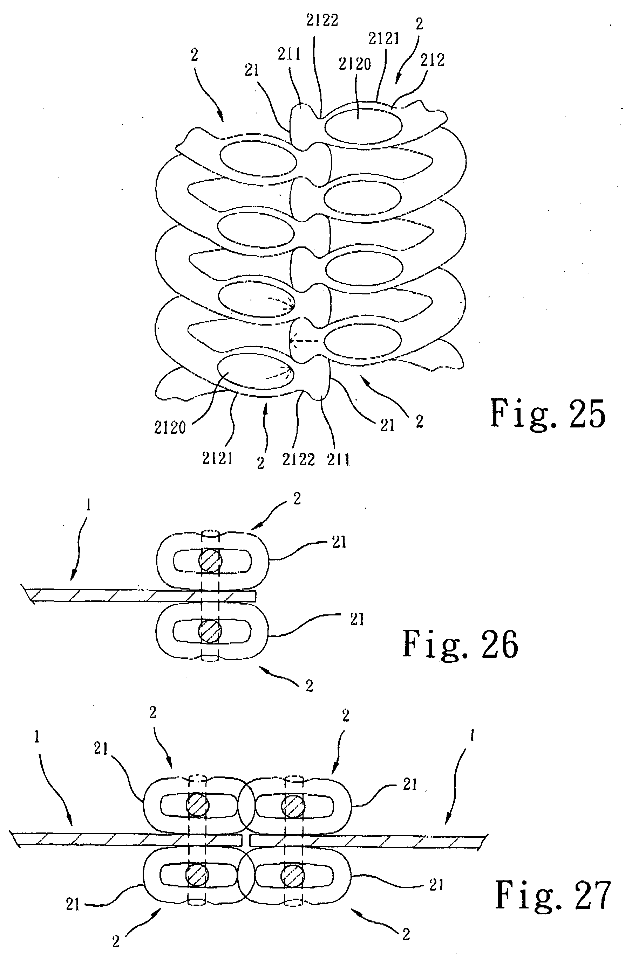

FIGS. 23-27 illustrate a double layer coiling zipper in accordance with a third embodiment of the present invention. According to this embodiment, the double layer coiling zipper uses tadpole-shaped interlocking teeth. As illustrated, the double layer coiling zipper comprises two zipper chain tapes **1,** and an interlocking series of teeth **2** at each of opposing top and bottom sides of each of the zipper chain tapes **1.** Each interlocking series of teeth **2** comprises a left-handed or right-handed series of coils **21** (see FIG. 24 and FIG. 25). Each coil element of the left-handed or right-handed series of coils **21** comprises a coil head **211** and a coil body **212** connected to the front side of the coil head **211** (see FIGS. 23 and **24**). Further, the coil heads **211** and coil bodies **212** of the left-handed and right-handed series of coils **21** are respectively interlocked. The coil body **212** of each coil element comprises a recessed face **2120**, two side flanges **2121** at two opposite lateral sides of the recessed face **2120,** and a neck **2122** disposed at the front side of the recessed face **2120** and connected to the coil head **211.** Thus, each coil **21** is tadpole-shaped. When the left-handed series of coils **21** and the mating right-handed series of coils **21** are interlocked, the coil head **211** of cach coil element of the left-handed (or right-handed) series of coil **21** is retrained between the necks **2122** of the coil bodies **212** of two coil elements of the (right-handed (or left-handed) series of coils **21,** preventing disengagement between interlocking teeth **2** upon transverse stretching (see the imaginary arrowhead sign in **FIG. 25**). This double layer coiling zipper with tadpole-shaped interlocking teeth is practical for use in a corner area in a suitcase or tent. When the coils **21** of the upper pair of tadpole-shaped interlocking teeth **2** is forced downwards by a sharp object, the coils **21** of the lower pair of tadpole-shaped interlocking teeth **2** are tightly engaged to give support, preventing disengagement between the coils **21** of the upper pair of tadpole-shaped interlocking teeth 2 (see FIG. 27).

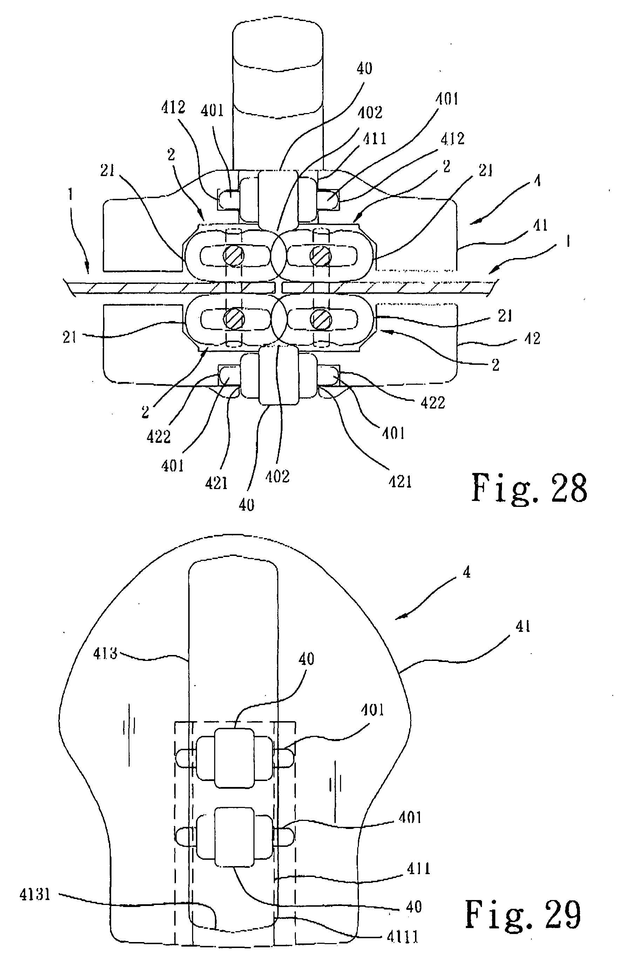

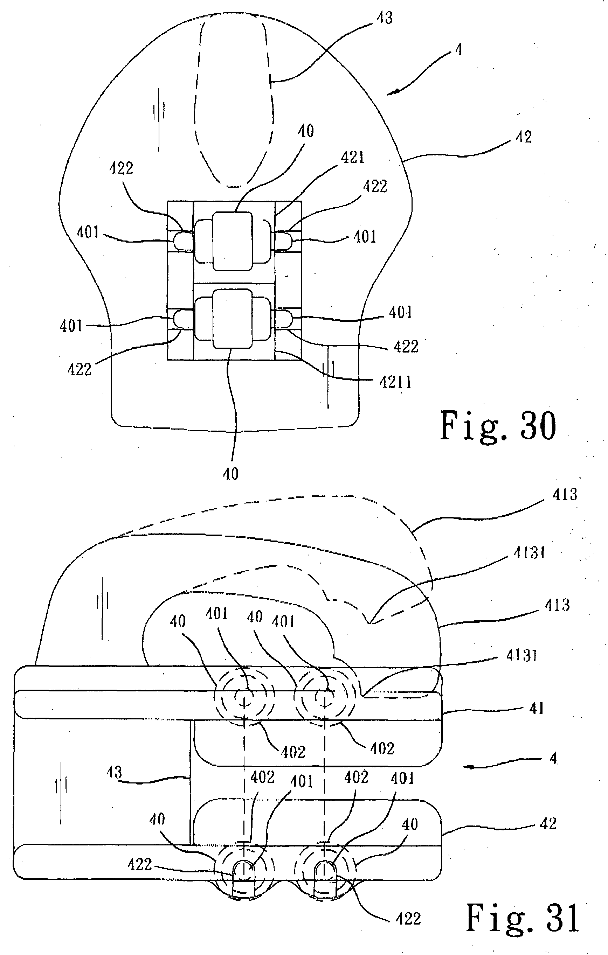

Referring to FIG. 28, a double layer coiling zipper in accordance with a fourth embodiment of the present invention is shown. According to this embodiment, the double layer coiling zipper uses tadpole-shaped interlocking teeth. The zipper slider **4** of the double layer coiling zipper(see FIGS. 30 and 31) comprises a top slide body block **41,** a bottom slide body block **42,** a center block **43** connected between the top slide body block **41** and the bottom slide body block **42,** and a crown **413** located on the top side of the top slide body block **41** for holding a pull tab (not shown). The top slide body block **41** comprises a crown **413,** a longitudinal slot. **411** cut through the top and bottom sides thereof on the middle, and two coupling grooves **412** located at two opposite lateral sides of the longitudinal slot **411**. The bottom slide body block **42** comprises a longitudinal slot **421** cut through the top and bottom sides thereof on the middle, and two coupling grooves **422** located at two opposite lateral sides of the longitudinal slot **421.** The zipper slider **4** further comprises a plurality of rollers **40** respectively rotatably mounted in the longitudinal slots **411;421** between the top slide body block **41** and the bottom slide body block **42.** Each roller **40** has two opposing pivot pins **401** coupled to the coupling grooves **412;422.**

When closing or opening the zip fastener, the rollers **40** arc kept in contact with the interlocking series of teeth **2** of the double layer coiling zipper, keeping the protruding upper faces of the left-handed and right-handed series of coils 21 on the same elevation, assuring positive engagement between the left-handed and right-handed series of coils **21.** During sliding movement of the zipper slider to close or open the left-handed and right-handed series of coils **21** of the interlocking series of teen 2 of the double layer coiling zipper, the rollers **40** are rotated relative to and kept in contact with the topmost edges of the protruding upper faces of the left-handed and right-handed series of coils **21** of the interlocking series of teen **2,** minimizing friction resistance and enhancing sliding smoothness.

Further, the front lower edge **4131** of the crown **413** of the top slide body block **41** of the zipper slider **4** is stopped at the front end **4111** of the longitudinal slot **411** (see FIG. 29) to prevent escape of the rollers **40** out of the zipper slider **4.** The front end of the longitudinal slot **421** of the bottom slide body block **42** is a close end **4211** (see FIG. 30) or sealed with a stop block, preventing escape of the rollers **40** out of the zipper slider **4.** Further, the rollers **40** are symmetrically and respectively concentrically arranged in between the top slide body block **41** and the bottom slide body block **42.**

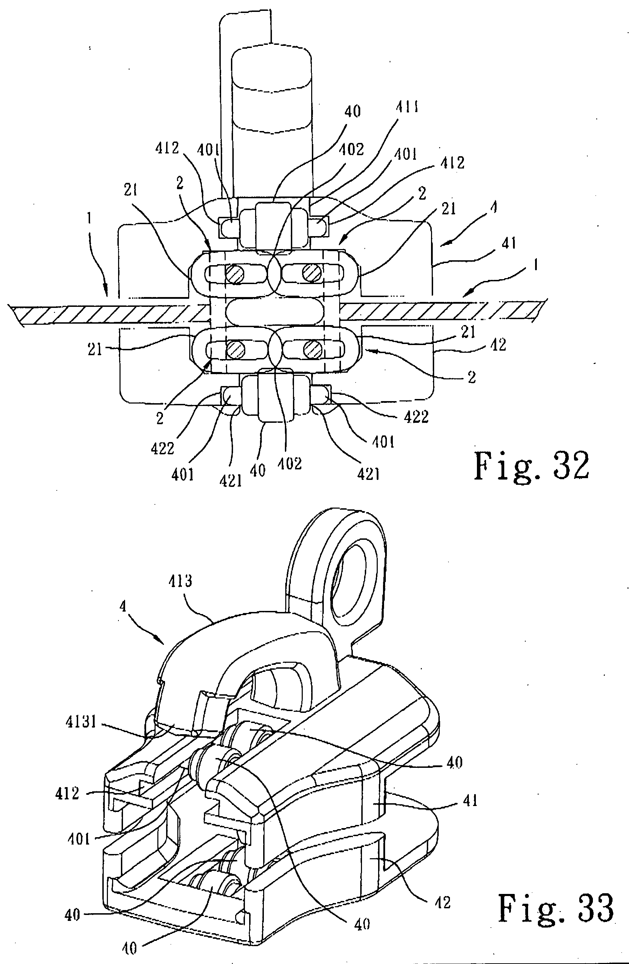

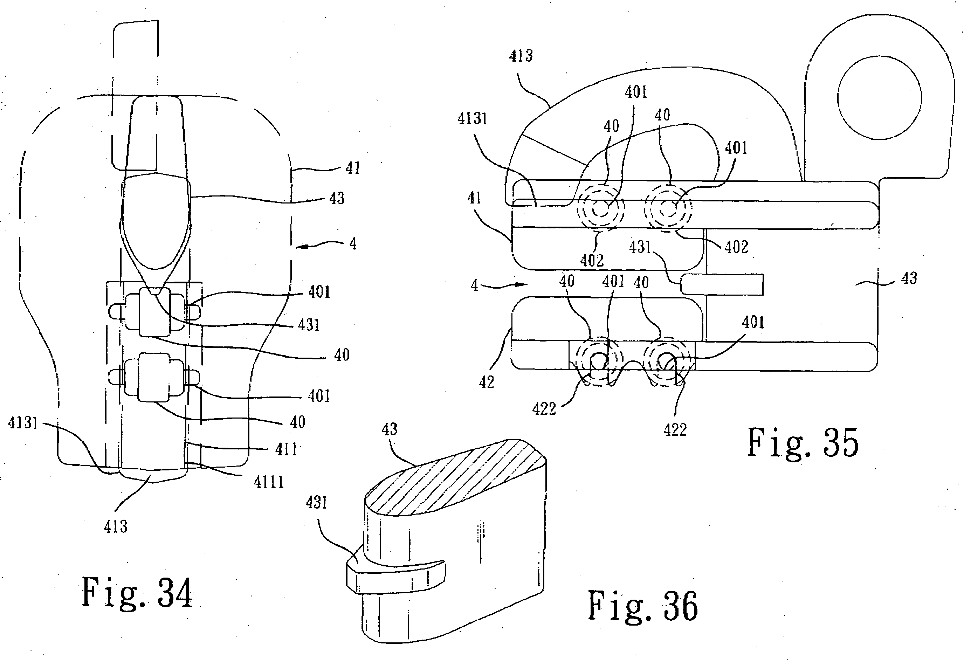

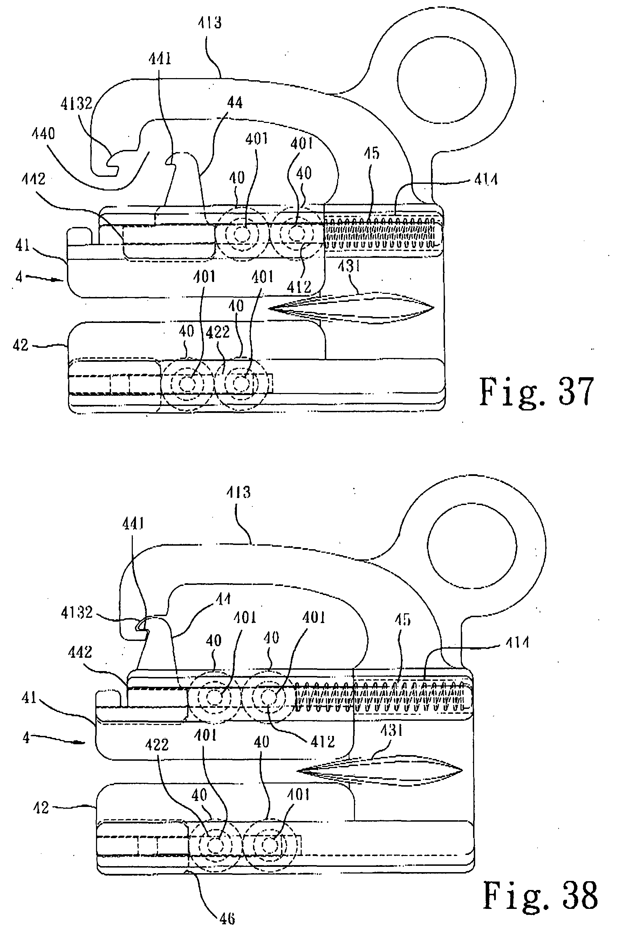

FIGS. 32-38 illustrate a double layer coiling zipper in accordance with a fifth embodiment of the present invention. This fifth embodiment is substantially similar to the aforesaid third embodiment with the exception that the zipper slider **4** further comprises a front balance tongue **431** forwardly extended from the center block **43** (see FIGS. 34-36). Similar to the aforesaid fourth embodiment, the zipper slider **4** has rollers **40** rotatably set in the longitudinal slots **411;421** between the top slide body block **41** and the bottom slide body block **42** with the pivot pins **401** thereof respectively coupled to the coupling grooves **412;422.** During sliding movement of the zipper slider to close or open the left-handed and right-handed series of coils **21** of the interlocking series of teen **2** of the double layer coiling zipper, the peripheral surfaces **402** of the rollers **40** are kept in contact with the topmost edges of the protruding upper faces of the left-handed and right-handed series of coils **21** of the interlocking series of teen **2,** minimizing friction resistance and enhancing sliding smoothness. Further, the front lower edge **4131** of the crown **413** of he top slide body block **41** of the zipper slider **4** is stopped at the front end **4111** of the longitudinal slot **411** (see FIG. 35) to prevent escape of the rollers **40** out of the zipper slider **4.** the front end of the longitudinal slot **421** of the bottom slide body block **42** is a close end or scaled with a stop block, preventing escape of the rollers **40** out of the zipper slider **4.** Further, the pull tab of the zipper slider **4** can be or a detachable design for allowing replacement. Thus, different designs of pull tabs can be selectively attached to the zipper slider **4** to satisty different clients. Further, as shown in FIG. 37, a sliding latch **44** is mounted in the top slide body block **41** and stopped at the front side of the rollers **40** in the longitudinal slot of the top slide body block **41** against a compression spring **45** in a spring mount **414** in the top sliding body block **41.** The sliding latch **44** has a hooked tip **441** engageable into a locating groove **4132** at the free end of the crown **413** (see FIG. 38) to prevent falling of the pull tab (not shown) out of the crown **413.** When forcing the sliding latch **44** backwards to disengage the hooked tip **441** from the locating groove **4132,** a pull tab (not shown) can then be hooked on or removed from the crown **413.** When release the hand from the sliding latch **44,** the sliding latch **44** is moved forwards automatically by the compression spring **45** to force the hooked tip **441** into engagement with the locating groove **4132** of the crown **413,** and therefore the pull tab (not shown) is prohibited from falling out or the crown **413.** Further, the sliding latch **44** comprises two opposing sliding blocks **442** respectively coupled to the coupling grooves **412** of the top slide body block **41.** Further, a stop block **46** is arranged in the bottom slide body block **42** at the front end of the longitudinal slot of the bottom slide body block **42** to keep the rollers **40** in the zipper slider.

In conclusion, the double layer coiling zipper in accordance with the present invention has the following features and advantages:
1. Alter the thermal shape-reformed compression process, the bigger filler cord 20 is compacted, and one extended lateral side edge of the bigger filler cord **20** is stopped against the coil heads **211** of the corresponding series or coils **21,** enabling the left-handed and right-handed series of coils **21** to be accurately interlocked, avoiding loosening.
2. The C-shapcd guide grooves **4251;4251** of the zipper slider **4** are configured to guide the upper and lower interlocking series of coils **21** forwards or backwards smoothly. Thus, even the double layer coiling zipper is installed in a corner area of a luggage, tent, or any of a variety of other articles, the interlocking series of coils **21** can be accurately and positively jointed or opened.
3. The front balance tongue **431** of the center block **43** of the zipper slider **4** has guide grooves **4311** adapted for guiding the coil heads **211** of the series of coils **21,** enabling the series of coils **21** to be jointed or opened smoothly and stably.
4. The coil body **212** of each coil clement of the left-handed and right-handed series of coils **21** is deformed during the thermal shape-reformed compression process, forming a collar **2123** having expanded flanges **2124** at two opposite lateral sides. When the left-handed and right-handed series of coils **21** are interlocked, the coil head **211** of one respective letl-handed series of coil **21** is stopped against one expanded flange **2124** of the collar **2123** of each of two coil elements of the mating right-handed series of coils **21,** enhancing interlocking tightness.
5. An adhesive (for example, epoxy resin) may he applied to the lines of stitches of the double layer coiling zipper prior to the thermal shape-reformed compression process. During the Thermal shape-reformed compression process, the applied adhesive is cured to affix looping sewing thread-joint points of the line of adhesive-wetted stitches in place, enhancing zipper coil strength and wearing resistance and preventing breaking of the lines of adhesive-wetted stitches during transportation of the finished product C.
6. Rollers **40** arc provided in the zipper slider **4** between the top slide body block **41** and the bottom slide body block **42** with the peripheral surfaces **402** thereof kept in contact with the series of coils **21,** assuring accurate and positive engagement between the series of coils **21.**
7. The zipper slider **4** can be configured for allowing replacement of the pull tab so that different pull tabs can be selectively attached to the zipper slider **4** to satisfy different clients and improve delivery service.
8. An UV curable adhesive may be dispensed through a dispensing nozzle **120** into the concave gap in each of the zipper chain tapes **1** and both coil teeth and then cured by ultraviolet rays to form a coating on the zipper chain tapes **1,** thereby providing waterproof, airtight and unbroken functions.

## Claims

1. A sandwich mesh of double layer coiling zipper, comprising: two zipper chain tapes (1), an interlocking series of teeth (2) at each of opposing top and bottom sides of each of said two zipper chain tapes (1), and a zipper slider (4) operable two move said interlocking series of teeth (2) between a jointing position and an opening position, each said interlocking series of teeth (2) comprising a bigger fitter cord (20) and a left-handed or right-handed series of coils (21) extending around said bigger filler cord (20), each said coil comprising a coil head (211) and a coil body (212) connected to a front side of said coil head (211), said zipper slider comprising opposing top slide body block (41) and bottom slide body block (42) and a filler block connected between said top slide body block (41) and said bottom slide body block (42), wherein said bigger filler cord (20) is compacted during formation of said interlocking series of teeth, having an extended side edge thereof stopped against the coil heads (211) of the respective series of coils; the sandwich mesh of double layer coiling zipper is **characterized in that** said zipper slider (4) comprises a front balance longue (431) forwardly extended from said center block (43) between said top slide body block (41) and said bottom slide body block (42), said front balance tongue (431) comprising a plurality of guide grooves (4311) for guiding the coil heads (211) of said series of coils (21) into the jointed/opened position.

2. The sandwich mesh of double layer coiling zipper as claimed in claim 1, wherein said top slide body block of said zipper slider comprises a top wall, two opposing sidewalls, and two C-shapcd guide grooves bilaterally defined between the top wall and opposing sidewalls of said top slide body block and fitting the outer configuration of said coils; said bottom slide body block of said zipper slider comprises a bottom wall, two opposing sidewalls, and two C-shaped guide grooves bilaterally defined between the bottom wall and opposing sidewalls of said bottom slide body block and fitting the outer configuration of said coils.

## Patentansprüche

1. Ein Sandwichgeflecht von einem doppelschichtigen Windungsreißverschluss, aufweisend:
zwei Reißverschlusskettenbänder (1), eine ineinandergreifende Reihe von Zähnen (2) an jeder von gegenüberliegenden oberen und unteren Seiten von jedem von den besagten zwei Reißverschlusskettenbändern (1) und einen Reißverschlussschieber (4), der betriebsbereit ist, um die besagten ineinandergreifenden Reihen von Zähnen (2) zwischen einer Verbindungsposition und einer Öffnungsposition zu bewegen, wobei jede von den besagten ineinandergreifenden Reihen von Zähnen (2) eine größere Füllschnur (20) und eine linksgängige oder rechtsgängige Reihe von Windungen (21) aufweist, die sich um die besagte größere Füllschnur (20) herum erstrecken, wobei jede der besagten Windungen einen Windungskopf (211) und einen Windungskörper (212) aufweist, der mit einer Stirnseite von dem besagten Windungskopf (211) verbunden ist, wobei der besagte Reißverschlussschieber gegenüberliegend einen oberen Schieberkörperblock (41) und einen unteren Schieberkörperblock (42) und einen Füllblock aufweist, der zwischen dem besagten oberen Schieberkörperblock (41) und dem besagten unteren Schieberkörperblock (42) verbunden ist, wobei die besagte größere Füllschnur (20) während einer Bildung der besagten ineinandergreifenden Reihe von Zähnen verdichtet wird, mit einer erweiterten Seitenkante davon gegen die Windungsköpfe (211) von der entsprechenden Reihe von Windungen gestoppt, wobei das Sandwichgeflecht von einem doppelschichtigen Windungsreißverschluss **dadurch gekennzeichnet ist, dass** der besagte Reißverschlussschieber (4) eine vordere Ausgleichszunge (431) aufweist, die sich von dem besagten zentralen Block (43) zwischen dem besagten oberen Schieberkörperblock (41) und dem besagten unteren Schieberkörperblock (42) nach vorne erstreckt, wobei die besagte vordere Ausgleichszunge (431) eine Vielzahl von Führungsnuten (4311) zum Führen der Windungsköpfe (211) von den besagten Reihen von Windungen (21) in die Verbindungs-/Öffnungsposition aufweist.

2. Das Sandwichgeflecht von einem doppelschichtigen Windungsreißverschluss, wie in Anspruch 1 beansprucht, wobei der besagte obere Schieberkörperblock von dem besagten Reißverschlussschieber eine obere Wand, zwei gegenüberliegende Seitenwände und zwei C-förmige Führungsnuten aufweist, die zweiseitig zwischen der oberen Wand und den gegenüberliegenden Seitenwänden von dem besagten oberen Schieberkörperblock definiert sind und zu der äußeren Konfiguration der besagten Windungen passen, wobei der besagte untere Schieberkörperblock von dem besagten Reißverschlussschieber eine untere Wand, zwei gegenüberliegende Seitenwände und zwei C-förmige Führungsnuten aufweist, die zweiseitig zwischen der unteren Wand und den gegenüberliegenden Seitenwänden von dem besagten unteren Schieberkörperblock definiert sind und zu der äußeren Konfiguration von den besagten Windungen passen.

## Revendications

1. Maille sandwich de fermeture à glissière enroulée à double couche, comprenant : deux bandes chaînettes (1) de fermeture à glissière, une série de dents d'engrènement (2) au niveau de chacun des côtés supérieur et intérieur opposés de chacune desdites deux bandes chaînettes (1) de fermeture à glissière, et un coulisseau (4) de fermeture à glissière pouvant être mis en oeuvre pour déplacer ladite série de dents d'engrènement (2) entre une position de jointoiement et une position d'ouverture, chaque dite série de dents d'engrènement (2) comprenant un cordonnet plus grand (20) et une série gauche ou droite de boucles (21) s'étendant autour dudit cordonnet plus grand (20), chaque dite boucle comprenant, une tête de boucle (211) et un corps de boucle (212) relié à un côté avant de ladite tête de boucle (211), ledit coulisseau de fermeture à glissière comprenant un bloc de corps de coulisseau supérieur opposé (41) et un bloc de corps de coulisseau inférieur (42) et un bloc de remplissage relié entre ledit bloc de corps de coulisseau supérieur (41) et ledit bloc de corps de coulisseau inférieur (42), dans lequel ledit cordonnet plus grand (20) est rendu compact pendant la formation de ladite série de dents d'engrènement, ayant un bord latéral étendu de celles-ci arrête contre les têtes de boucle (211) des séries respectives de boucles ; la maille sandwich de fermeture à glissière enroulée à double couche est **caractérisée en ce que** ledit coulisseau de fermeture à glissière (4) comprend une longuette d'équilibre avant (431) étendue vers l'avant à partir dudit bloc central (43) entre ledit bloc de corps de coulisseau supérieur (41) et ledit bloc de corps de coulisseau inférieur (42), ladite Languette d'équilibre avant (431) comprenant une pluralité de rainures de quidage (4311) pour guider les têtes de boucle (211) desdites séries de boucles (21) dans la position jointe / ouverte.

2. Maille sandwich de fermeture à glissière enroulée à double couche selon la revendication 1, dans laquelle ledit bloc de corps de coulisseau supérieur dudit coulisseau de fermeture à glissière comprend une paroi supérieure, doux parois latérales opposées et deux rainures de guidage en forme de C définies de façon bilatérale entre la paroi supérieure et les parois latérales opposées dudit bloc de corps de coulisseau supérieur et s'adaptant à la configuration extérieure desdites bouches ; ledit bloc de corps de coulisseau inférieur dudit coulisseau de fermeture à glissière comprend une paroi inférieure, deux parois latérales opposées, et deux rainures de guidage en forme de C définies de façon bilatérale entre la paroi inférieure et les parois latérales opposées dudit bloc de corps de coulisseau inférieur et s'adaptant à la configuration extérieure desdites boucles.
